(19) Europäisches Patentamt
European Patent Office
Office européen des brevets

(11) EP 2 778 609 B1

(12) **EUROPEAN PATENT SPECIFICATION**

(45) Date of publication and mention
of the grant of the patent:
**11.07.2018 Bulletin 2018/28**

(51) Int Cl.:
**G01C 19/5776** (2012.01)      **G01P 21/00** (2006.01)
**G01C 19/5691** (2012.01)      **G01C 25/00** (2006.01)

(21) Application number: **11874070.3**

(22) Date of filing: **14.10.2011**

(86) International application number:
**PCT/RU2011/000806**

(87) International publication number:
**WO 2013/055253 (18.04.2013 Gazette 2013/16)**

(54) **METHOD FOR CALIBRATING THE SCALE FACTOR OF AN AXISYMMETRIC VIBRATORY GYROSCOPE**

VERFAHREN ZUR KALIBRIERUNG DES SKALENFAKTORS EINES AXIALSYMMETRISCHEN VIBRATIONSKREISELS

PROCÉDÉ D'ÉTALONNAGE DU COEFFICIENT DE MISE À L'ÉCHELLE D'UN GYROSCOPE VIBRATOIRE AXISYMÉTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.09.2014 Bulletin 2014/38**

(73) Proprietor: **Innalabs Limited**
**Dublin 2 (IE)**

(72) Inventors:
• **OKON, Isaak Markovich**
**Brooklyn, NY 11224 (US)**

• **RENAULT, Alain**
**06110 Le Cannet (FR)**

(74) Representative: **Roberts, Peter David**
**Marks & Clerk LLP**
**1 New York Street**
**Manchester M1 4HD (GB)**

(56) References cited:
**RU-C1- 2 191 351        RU-C1- 2 400 707**
**RU-C2- 2 269 813        US-A1- 2009 205 422**
**US-A1- 2010 058 831**

## Description

## Technical field

The invention relates to gyroscopic instrument making and can be used for measuring angular velocities and rotation angles relative to an inertial space as part of orientation, navigation and motion control systems. In particular, under consideration here is a method for calibrating the scale factor of an axisymmetric vibratory gyrometer or an axisymmetric vibratory gyroscope.

## Background of the invention

It is known that a vibratory gyrometer may be manufactured from an axisymmetric or non-axisymmetric resonator with two degrees of freedom. The present invention relates to the first category, namely vibratory gyrometers manufactured from axisymmetric resonators. As axisymmetric resonators may be used in vibratory gyroscopes, the present invention also relates to these types of gyroscope.

The resonator is set into vibration at its resonant frequency by an amplitude control signal. The orientation of the vibration is controlled by a precession control signal. The demodulation of this signal makes it possible to know by calculation the applied precession rate. The excitation of mechanical vibrations of both the principle mode (antinode) and the precession mode (node) is produced by electrical oscillators (electromagnetic or electrostatic oscillators) with a gain which is dependent on the ratio of the force generated which is applied to the resonator to the amplitude of the mechanical oscillations. The transmission coefficients of the detectors at the antinode and the node are determined by the ratio of the amplitude of the vibrations to the electrical signal being processed at the output of the detectors.

The precision of calculation of the rate of rotation is a function of the precision of calculation of the scale factor of the manufactured system, and in particular of the precision of calculation of the detector oscillator gains of the resonator. The scale factor is the ratio of the rate of rotation of the vibration to the value of the output signal in the case of the gyrometer. The scale factor is the ratio of the rate of rotation of the vibration to the value of the precession control signal in the case of the gyroscope.

The scale factor is a function of temperature and evolves over time. It is usual to compensate for temperature variations in the scale factor using a computation unit and temperature measurements, either by tabulation of the scale factor or by a polynomial calculation. These methods may be inadequate and do not take aging into account.

A method for calibrating the scale factor of a vibratory gyroscope is described in the document US 2005259576, H04L12/26, published 11.24.2005. The method consists in measuring the output signal of the vibratory gyrometer while it is mounted on a support set into rotation at a constant rate. The scale factor is the ratio of the value of the applied rate of rotation to the value of the output signal. This method may be carried out before the operational use of the sensor using appropriate means. It cannot be carried out while the sensor is in use, unless another sensor is available.

Patent EP 2 092 271, G01C19/56, G01C25/00, published 08.25.2009, proposes two calibration methods making it possible to improve the precision of the scale factor in the case of an axisymmetric resonator. This solution is considered to be the closest prior art.

The first method consists in adding to the forces controlling the vibration a stiffness control mechanism making it possible to modulate the frequency of the vibration. Measuring this frequency modulation makes it possible to carry out a confluent analysis. As the frequency modulation generally does not exceed a magnitude of 1Hz, and as the average frequency of the resonators that are normally used is between 2 and 20kHz, the precision required for the frequency measurement for a scale factor with a precision of 0.05% is of the order of 0.25 to 0.025ppm. As the resonant frequency of the resonators used is not sufficiently stable versus temperature, this precision of measurement is not fully consistent with an operational thermal environment outdoors.

The second method consists in processing the amplitude control signal using the amplitude detection signal amplified by a constant gain and phase-adapted, and in observing the exponentially increasing evolution of this amplitude, then in inverting the sign of the gain to observe the exponentially decreasing evolution of the amplitude, and also in calculating a correction term based on these observations. After this preliminary phase, the amplitude is adjusted to a fixed value. The drawback of this method is that it causes the amplitude, and therefore the scale factor, to vary in significant proportions during calibration. The device is not operational during calibration. After calibration, the benefits afforded by this operation decrease to zero over time.

## Disclosure of the invention

The aim of the present invention is to achieve the technical result of arriving at a scale factor with increased precision by performing a calibration of the system while it is in use.

The stated technical result is achieved in that the precision and the reliability of the readings taken by the gyroscope during operation thereof are increased.

According to an aspect of the invention there is provided a method according to claim 1.

The present invention will be explained by specific exemplary embodiments which are not, however, the only possible embodiments but clearly demonstrate the possibility of achieving the required technical result.

**Description of the figures in the drawings**

Figure 1     shows a block circuit diagram of a control circuit;

Figure 2     shows a function in accordance with a Bode plot;

Figure 3     shows a schematic section of a cylindrical resonator which can be used for implementing the calibration described in the present invention;

Figure 4     shows a schematic representation of the calibration described in the present invention, in which the measurable quantity is calculated using a modulated quadrature control signal;

Figure 5     shows a schematic representation of a first alternative type of calibration described in the present application, in which the measurable quantity is calculated using a frequency modulated amplitude control signal;

Figure 6     shows a block circuit diagram of a second alternative proposed method, which comprises generating a measurable modulated excitation signal in phase with a mechanical vibration;

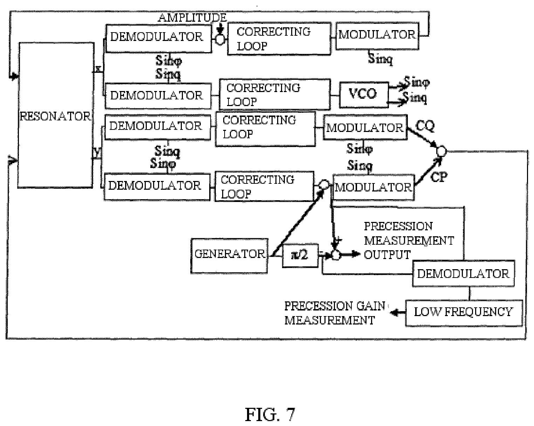

Figure 7     shows a block circuit diagram of a third alternative possible the method, which comprises generating a measurable modulated signal in precession control loop.

The implementation of an axisymmetric vibratory gyroscope or gyrometer comprises processing the amplitude control signal applied in the direction of the vibration with the aim of causing the vibration of the resonator and the precession control signal applied perpendicularly to the direction of the vibration with the aim of causing this vibration to precess. These two control signals are fed at the frequency of the vibration and are in time quadrature with this vibration. A third control signal is applied to the vibration collinearly with the precession control signal and temporally in phase with the vibration. This control signal is intended to combat the anisotropic effects of the frequency that appear in axisymmetric resonators. In fact, perfect axisymmetry is practically unachievable. For the resonator to give the desired performance, it is necessary to measure with the detectors the residual vibration in the direction perpendicular to the direction of the vibration and in temporal quadrature with the latter, and then to cancel said residual vibration using the third control signal. This control signal is normally called the quadrature generator control signal.

According to the present invention, provision is made for a method of calibration of the scale factor containing an operation of pre-calibration consisting, according to the aforementioned method, in measuring and storing in memory an initial scale factor and a calibration operation consisting in calculating a value of a measurable quantity connected to the scale factor according to a relationship of proportionality, and in calculating a corrected scale factor based on the ratio of the value of the initial measurable quantity to the current measurable quantity.

It is known that the detection gain along each direction varies with changes in temperature and time parameters, and that the ratio of the detection gains along two modally orthogonal directions presents a stability greater than the relative stability of each isolated gain. It is possible to perform a calibration of this ratio before operational use of the equipment. The same applies for the ratio of oscillator gains along two modally orthogonal directions. A current instantaneous measurement of the measurable quantity makes it possible to calibrate the scale factor while the sensor is in use.

The measurable quantity according to a first embodiment of the method of the invention is the value of the modulated quadrature detection signal that results from a modulated quadrature generator control signal added to the actual quadrature control signal, taking into account that the modulation frequency is above the passband of the quadrature control loop. The quadrature control signal is modally in the direction perpendicular to the direction of vibration, the low-amplitude vibration resulting from it being temporally phase-shifted with respect to the latter.

In a first alternative method, the amplitude control signal is modulated to a frequency above the passband of the amplitude, and the measurable quantity is the value of the amplitude modulation measured in the direction of the vibration.

A second alternative method uses a low-frequency quadrature control loop with respect to the phase of the detected amplitude. This makes it possible to feed amplitude excitation which has been modulated at a frequency higher than the frequency band of the quadrature control loop in phase with the mechanical vibration and to measure the resultant signal, which is used for correcting the scale factor. Another aspect not forming part of the invention consists in modulating the precession control channel. In principle, this control loop has a wide frequency band resulting from the requirements in respect of the measurement of the input angular velocity. In this method, the modulation frequency is within the measurable range of the precession channel, and the measurable output signal is inversely proportional to the gain of the loop. In this case, it is necessary to separate, in the output signal, the measurement of the inertial angular velocity from the modulated signal processed by the generator and to subtract this signal from the output precession signal in order to obtain a correct measurement of the inertial angular velocity.

The embodiment of the invention can be used either independently or in combination with the alternative methods with the aim of providing maximum precision in the assessment of the scale factor during operation in current time.

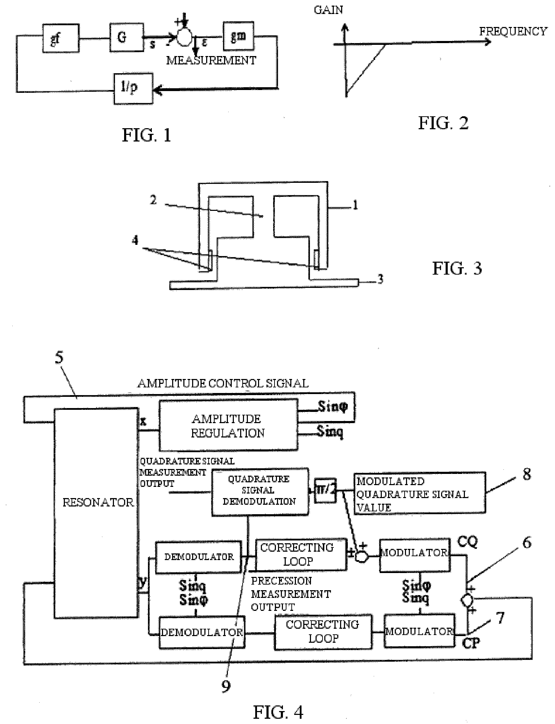

With reference to Figure 3, the calibration method according to the present invention may be implemented with any vibratory gyroscopes or gyrometers using axisymmetric resonators with two degrees of freedom, particularly resonators containing a built-in vibrating cylindrical part 1, fixed to a shaft 2 with a base 3. The detectors and actuators may be piezoelectric or electrostatic elements 4. For the startup in accordance with the method shown in Figure 4, the resonator is set into vibration at its resonant frequency in a determined direction by an amplitude control signal 5. In the modally orthogonal direction, the vibration is controlled by the quadrature generator control signal 6 and by the precession control signal 7.

According to the first calibration method described in the present invention, an alternatve control signal 8 of constant frequency is applied to the output of the quadrature loop upstream of the modulator. The frequency of this signal is above the passband of the quadrature loop. The alternative signal 9 that appears at the output of the demodulator is the measurable quantity.

An electronic startup device, in particular a voltage and frequency generator, sets the amplitude of the vibration to a setpoint value of the control signal Xc along a first direction x, whereas the amplitude of the vibration along a direction y modally orthogonal to the direction x is processed under the action of Coriolis forces. The force along x is the amplitude control
signal. The force compensating for the vibration along y is the sum of the precession control signal CP and the quadrature control signal CQ. The value of the precession control signal CP determines the rate $\Omega$. The quadrature control signal CQ modulated to a frequency above the passband of the quadrature loop is added to the main quadrature control signal. The automatic regulation system of the error of the quadrature loop demodulated to the frequency of the alternative quadrature control signal CQ is the measurable quantity.

The equations of forces along (the direction of) y are as follows:

$$my'' + fy' + ry = CQ + 2mx'\Omega + CP \quad (1)$$

where m is the modal mass, f the damping, r the gradient, y the amplitude of the vibration along y, x the amplitude of the vibration along x, and $\Omega$ the rate of rotation.

The resonator exhibits negligible damping, which makes it possible to simplify the equation by removing this term. When the gyroscopic chain functions efficiently the Coriolis force due to the rotation and the force due to the precession control signal balance out:

$$2mx'\Omega + CP = 0 \quad (2)$$

Where

$$x = x°\cos b \text{ and } x' = -x°b'\sin b \quad (3)$$

where b = current phase of the vibration of amplitude x°.

Equation (1) simplifies to:

$$my'' + ry = CQ \quad (4)$$

For a quadrature control signal $CQ = CQ°\cos a\cos b$ the quadrature amplitude y is:

$$y = y°sinasinb \quad (5)$$

where a = current phase of the modulation of the quadrature signal with amplitude y°:

$$y' = y°(a'cosasinb + b'sinacosb) \quad (6)$$

$$y'' = y°(-a'^2 sinasinb + a'b'cosacosb + a'b'cosacosb - b'^2 sinasinb) \quad (7)$$

Inserting (5), (6) and (7) in (4) and omitting the very small second order value gives:

$$CQ = CQ°cosacosb = my°2a'b'cosacosb \quad (8)$$

In practice, taking into account the oscillator gain gm along the direction y and the detector gains gd along x and gf along y, equation (2) becomes:

$$2mx°b'sinb * \Omega = CPgm = CP°sinbgm \quad (9) \,.$$

Considering that:

$$x°gd = Xc \quad (10) \,,$$

where Xc is the setpoint value of the amplitude control signal of the amplitude regulation loop, equation (8) can become:

$$CQ°gm = my°2a'b' \quad (11)\,.$$

Considering that:

$$y°gf = Y \quad (12),$$

the following ratio can be determined from (11) and (12):

$$\frac{Y}{CQ°} = \frac{gmgf}{2ma'b'} \quad (13),$$

the following ratio can be determined from (9) and (10):

$$\frac{\Omega}{CP°} = \frac{gmgd}{2mXcb'} \quad (14),$$

and the following ratio from (13) and (14):

$$\frac{\Omega}{CP°} = \frac{a' \; gd \; Y}{CQ°gf \; Xc} \quad (15) \,.$$

As stated above, the ratio of the detection gain gd along x to the detection gain gf along y is stable, so that, for a stable quadrature modulation control signal CQ° and a stable amplitude vibration control signal Xc, and a pulse a' of the quadrature control signal of stability equal to that of pulses in a synchronized pulse generator, the ratio $\frac{\Omega}{CP°Y}$ is

constant. In practice, the scale factor $\frac{\Omega}{CP°}$ and the quantity *Y* are measured in the factory before delivery of the sensor and stored in memory in the computation unit of the sensor. During operational functioning of the equipment, the quantity Y is measured, which makes it possible to apply a correction coefficient based on equation (15) to the scale factor.

(15) gives:

$$\Omega/CP° = a'gdY°/(CQ°gfXc) = SF° = KY°$$

the initial scale factor,
where

$$K = a'gd/(CQ°gfXc).$$

The scale factor measurable during operation is as follows:

$$SF = SF°Y/Y° \qquad (15a).$$

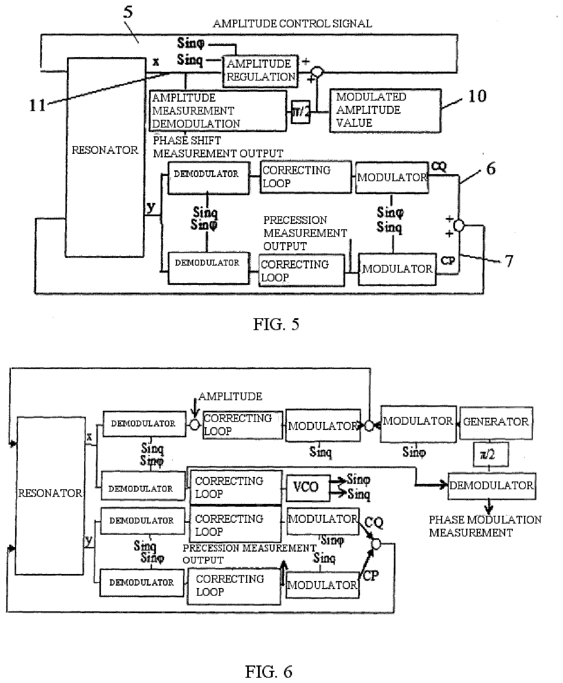

According to the first alternative calibration method described in the present application, with reference to Figure 5, an alternative control signal 10 of constant frequency is applied to the output of the amplitude loop. The frequency of this signal is above the passband of the amplitude loop. The alternative signal 11 that appears at the input of the amplitude loop is the measurable quantity.

The electronic startup device sets the amplitude of the vibration to a setpoint value of the control signal Xc along a first direction x, whereas the amplitude of the vibration is set to a value of the quadrature control signal along a direction y modally orthogonal to the direction x. The force along x is the amplitude control signal. The force along y is the sum of the precession control signal CP and the quadrature control signal. The value of the precession control signal CP determines the rate $\Omega$. An amplitude control signal CA modulated to a frequency above the passband of the amplitude regulation loop is added to the amplitude control signal. The error of the automatic regulation system of the amplitude loop demodulated to the frequency of the amplitude control signal CA is the measurable quantity. The equations of forces acting along x are as follows:

$$mx'' + fx' + rx + CA = 0 \quad (16),$$

where m is the modal mass, f the damping, r the gradient, and x the amplitude of the vibration along x. The resonator exhibits negligible damping, which makes it possible to remove this term. Removing the value of this damping and the constant CA simplifies the equation as follows:

$$mx'' + rx + CA = 0 \quad (17).$$

For an amplitude control signal *CA = CA°cosasinb* the amplitude x is:

$$x = \left(x° + xsina\right)cosb \quad (18),$$

where a = current phase of the amplitude modulation y°:

$$x' = -x°b'sinb + x(a'cosacosb - b'sinasinb) \quad (19)$$

$$x'' = -x^\circ b'^2 cosb + \ddot{x}(-a'^2 sinacosb - a'b' cosasinb - a'b' cosasinb - b'^2 sinacosb) \quad (20).$$

The signal CA is:

$$CA = CA^\circ cosasinb = mx2a'b' cosasinb \quad (21).$$

In practice, given the detection gain gd along the direction x and the engine (productivity) gains gn along the direction x and gm along the direction y, equation (2) becomes:

$$2mx^\circ b' sinb\Omega = CPgm = CP^\circ sinbgm$$

Considering that:

$$x^\circ gd = Xc \; ,$$

equation (21) becomes:

$$CA^\circ gn = mx2a'b' \quad (22).$$

Considering that:

$$xgd = X \quad (23),$$

the following ratio can be determined from (22) and (23):

$$\frac{X}{CA^\circ} = \frac{gngd}{2ma'b'} \quad (24),$$

the following ratio can be determined from (9) and (10):

$$\frac{\Omega}{CP^\circ} = \frac{gmgd}{2mXcb'}$$

and from (24) and (14):

$$\frac{\Omega}{CP^\circ} = \frac{a'}{CA^\circ} \frac{gm}{gn} \frac{X}{Xc} \quad (25) \; .$$

As stated above, the ratio of the oscillator gain gn along x to the oscillator gain gm along y is stable, so that for a stable vibration amplitude control signal CA° and a stable vibration amplitude control signal Xc, and a pulse a' of the amplitude control modulation signal of stability equal to that of pulses in a synchronized pulse generator, the ratio $\frac{\Omega}{CP^\circ X}$ is constant. In practice, the scale factor $\frac{\Omega}{CP^\circ}$ and the quantity X are measured at the factory before delivery of the sensor and stored in memory in the computation unit of the sensor. During operational functioning of the equipment, the quantity X is measured, which makes it possible to apply a correction coefficient based on equation (25) to the scale factor. The scale factor is modulated like the amplitude of the vibration and may be subject to a correction for enhanced performance of the equipment.

(25) gives the initial scale factor, as follows:

$$\Omega/CP° = a'gmX°/(CA°gnXc) = SF° = KX°.$$

The current scale factor in time:

$$SF = KX = SF°X/X° \qquad (25a),$$

where

$$K = a'gm/(CA°gnXc).$$

It should be noted that the calibration methods in accordance with this method are not limited to the procedures mentioned above and can be varied within the scope of the present method.

Analytical calculations which have been performed are applicable for producing correction factors for the scale factor applicable to the second and third alternative methods in accordance with the block circuit diagrams shown in figure 6.

Furthermore, CE = CE° cosasinb and relationship (13) now have the form

$$Y/CE° = gmgf/(2ma'b'), \; y = y°sinacosb \qquad (13a)$$

and expression (15) will be

$$\Omega/CP° = a'gdY/(CE°gfXc) \qquad (15a)$$

In the case of excitation within the frequency band of the control loop, it is necessary to consider the reaction of the control loop to the additional signal which causes a distortion of the measurable inertial angular velocity at the output. The block circuit diagram of the control loop for this case is shown in figure 1, where gf and gm, as before, are the detection and oscillator gains in the channel Y, and the integrating factor 1/p is the resonator and G is the gain of the electronics. For simplification purposes, we will use the coefficient of the electronics and not the real transfer function of the channel Y. This simplification does not have any effect on the result or on the analytical conclusions below.

The frequency band in this case is determined by the following expression

$$gfgmG/(2\pi)$$

The coefficient of the open circuit at the measurement point is as follows:

$$OLG = gmgfG/p$$

$$\varepsilon = e-OLG\varepsilon$$

$$\varepsilon/e=1/(1+OLG)=1/(1+gmgfG/p)= p/(gmgfG)*1/(1+p(gmgfG)).$$

This function has a response corresponding to the Bode plot (figure 2). This high-frequency filter blocks low frequencies, which corresponds to a frequency band of the gyrometer and to the high gain of the loop. Therefore, within the frequency band of approximation the response can be determined by the following expression:

$$p/(gmgfG).$$

The measurement of the output ε determines the signal which is dependent on the piezoelectric elements and on the gain G, which is very stable and can be estimated precisely.

Depending on the conditions of use of the gyrometer, it is possible at the output of the precession control loop, which is the sum of the inertial angular velocity and the reaction to the measurable and known signal of the generator, to filter out the latter, assuming that rapid changes in the output are associated with the measurable inertial angular velocity whereas the response to the set signal of the generator is slow and is associated with the changes in the gain of the piezoceramics and the change in the scale factor, which is determined by the proposed method. This method for filtering and isolating a signal which can be used to determine the current value of the scale factor is essentially dependent on the dynamics of a measurable inertial velocity, that is the dynamics of an object on which a gyroscopic sensor is mounted.

**Claims**

1. A calibration method for the scale factor of an axisymmetric vibratory gyroscope functioning by application of an amplitude control signal (5), of a precession control signal (7) and of a quadrature control signal (6) to a resonator so as to set it into vibration at its resonant frequency, **characterized in that** the method comprises the following:

   first pre-calibration steps consisting of:
   applying the amplitude control signal, precession control signal and the quadrature control signal to the resonator so as to set it into vibration at its resonant frequency, and also applying a modulated quadrature control signal (8) having a constant modulation frequency above a passband of a quadrature control loop of the gyroscope; measuring a resulting initial modulated quadrature detection signal (9) value and storing the initial measured modulated quadrature detection signal value in memory; and
   measuring an initial scale factor of the resonator and storing the initial scale factor in memory;
   second subsequent steps of:

   applying the modulated quadrature control signal (8); measuring a resulting current modulated quadrature detection signal (9) value; and
   calculating a corrected scale factor according to a relationship of proportionality including the initial scale factor, the initial measured modulated quadrature detection signal value and the current measured modulated quadrature detection signal value, according to the formula:

$$\text{Corrected scale factor} = \frac{\text{Initial scale factor x Current measured quadrature detection signal value}}{\text{Initial measured quadrature detection signal value}}$$

**Patentansprüche**

1. Verfahren zur Kalibrierung des Skalenfaktors eines axialsymmetrischen Vibrationskreisels, welches durch Anlegen eines Amplitudensteuerungssignals (5), eines Präzessionssteuerungssignals (7) und eines Quadratursteuerungssignals (6) an einen Resonator funktioniert, so dass er bei seiner Resonanzfrequenz in Schwingung versetzt wird, **dadurch gekennzeichnet, dass** das Verfahren folgende Schritte beinhaltet:

   erste Vorkalibrierungsschritte, bestehend in:

   Anlegen des Amplitudensteuerungssignals, des Präzessionssteuerungssignals und des Quadratursteuerungssignals an den Resonator, um ihn bei seiner Resonanzfrequenz in Schwingung zu versetzen, und ebenfalls Anlegen eines modulierten Quadratursteuerungssignals (8), welches eine konstante Modulationsfrequenz über einem Durchlassband einer Quadratursteuerungsschleife des Kreisels besitzt;
   Messen eines resultierenden anfänglichen modulierten Quadraturerkennungssignal-Wertes (9) und Speichern des anfänglichen modulierten Quadraturerkennungssignal-Wertes im Speicher; und
Messen eines anfänglichen Skalenfaktors des Resonators und Speichern des anfänglichen Skalenfaktors im Speicher;

zweite darauf folgende Schritte, bestehend in:

Anlegen des modulierten Quadratursteuerungssignals (8);
Messen eines resultierenden aktuellen modulierten Quadraturerkennungssignal-Wertes (8); und Berechnen eines berichtigten Skalenfaktors nach einem Proportionalitätsverhältnis, beinhaltend den anfänglichen Skalenfaktor, den gemessenen anfänglichen modulierten Quadraturerkennungssignal-Wert und den gemessenen aktuellen Quadraturerkennungssignal-Wert nach folgender Formel:

$$\text{Berichtigter Skalenfaktor} = \frac{\text{Anfänglicher Skalenfaktor x Gemessener aktueller Quadraturerkennungssignal-Wert}}{\text{Gemessener anfänglicher Quadraturerkennungssignal-Wert}}$$

## Revendications

1. Procédé d'étalonnage pour le coefficient de mise à l'échelle d'un gyroscope vibratoire axisymétrique fonctionnant par l'application d'un signal de commande d'amplitude (5), d'un signal de commande de précession (7) et d'un signal de commande de quadrature (6) à un résonateur de manière à le mettre en vibration à sa fréquence résonante, **caractérisé en ce que** le procédé comprend ce qui suit :

des premières étapes de préétalonnage consistant à :

appliquer le signal de commande d'amplitude, le signal de commande de précession et le signal de commande de quadrature au résonateur de manière à le mettre en vibration à sa fréquence résonante, et également appliquer un signal de commande de quadrature modulé (8) ayant une fréquence de modulation constante supérieure à une bande passante d'une boucle de commande de quadrature du gyroscope ;
mesurer une valeur de signal de détection de quadrature modulé (9) initiale résultant et mettre en mémoire la valeur de signal de détection de quadrature modulé initiale ; et
mesurer un coefficient de mise à l'échelle initial du résonateur et mettre en mémoire le coefficient de mise à l'échelle initial ;

des deuxièmes étapes consécutives consistant à :

appliquer le signal de commande de quadrature modulé (8) ;
mesurer une valeur de signal de détection de quadrature modulé actuelle résultant (9) ; et
calculer un coefficient de mise à l'échelle corrigé conformément à une relation de proportionnalité incluant le coefficient de mise à l'échelle initial, la valeur de signal de détection de quadrature modulé mesurée initiale et la valeur de signal de détection de quadrature modulé mesurée actuelle, selon la formule :

$$\text{Coefficient de mise à l'échelle corrigé} = \frac{\text{coefficient de mise à l'échelle initial x valeur de signal de détection de quadrature mesurée actuelle}}{\text{valeur de signal de détection de quadrature mesurée initiale}}$$

EP 2 778 609 B1

FIG. 1

FIG. 2

FIG. 3

FIG. 4

11

FIG. 5

FIG. 6

FIG. 7

**EP 2 778 609 B1**

**REFERENCES CITED IN THE DESCRIPTION**

**Patent documents cited in the description**

- US 2005259576 A
- US H04L1226 A
- EP 2092271 A
- EP G01C1956 A
- EP G01C2500 A